# EUROPEAN PATENT SPECIFICATION

(11) **EP 2 262 856 B1**
(45) Date of publication and mention of the grant of the patent: **08.04.2015**
(21) Application number: 09724916.3
(22) Date of filing: 13.02.2009
(51) Int. Cl.: C08K 5/17

(54) **HYDROGEN SULFIDE SCAVENGERS AND METHODS FOR REMOVING HYDROGEN SULFIDE FROM ASPHALT**
SCHWEFELWASSERSTOFF-FÄNGER UND VERFAHREN ZUR ENTFERNUNG VON SCHWEFELWASSERSTOFF AUS ASPHALT
AGENTS DE PIÉGEAGE DU SULFURE D'HYDROGÈNE ET PROCÉDÉS D'ÉLIMINATION DU SULFURE D'HYDROGÈNE À PARTIR DE L'ASPHALTE

(30) Priority: 28.03.2008 US 58091
(43) Date of publication of application: 22.12.2010
(73) Proprietor: General Electric Company, Schenectady, NY 12345 (US)
(72) Inventor: ELDIN, Sherif, Bellaire TX 77401 (US); KARAS, Lawrence, John, Spring TX 77382 (US)
(74) Representative: Szary, Anne Catherine
(86) International application number: PCT/US2009/033995
(87) International publication number: WO 2009/120419

(56) References cited:
- EP-A- 0 411 745
- WO-A-2005/059016
- US-A- 2 238 201
- US-A1- 2005 238 556
- US-B1- 6 444 117
- DATABASE WPI Week 198216 Thomson Scientific, London, GB; AN 1982-31763E XP002527243 -& JP 57 042763 A (KAO SOAP CO LTD) 10 March 1982 (1982-03-10)

## Description

### FIELD OF THE INVENTION

This invention relates generally to hydrogen sulfide scavengers and more particularly, to hydrogen sulfide scavengers for asphalt.

### BACKGROUND OF THE INVENTION

During the refining of crude oil, asphalt products or heavy oil are produced as the residue from crude oil distillation. Asphalt products are black, viscous materials, which can be upgraded to higher-valued gasoline or diesel by further refining. However, asphalt products often contain hydrogen sulfide and upgrading the asphalt products increases the risk of hydrogen sulfide exposure. Since hydrogen sulfide is corrosive in the presence of water and poisonous in very small concentrations, it must be removed before the asphalt products can be upgraded.

Asphalt has a high temperature range and current commercial technology employs the use of water-based triazines as hydrogen sulfide scavengers. However, these water-based triazine materials can cause foaming, spitting and possible spillovers. Commercially available organic based scavengers are expensive and can contain metal ions. The introduction of additional metal ions can create incompatibility with up-grader catalyst beds.

What is needed is an improved organic based scavenger for removing hydrogen sulfide from asphalt.

### BRIEF DESCRIPTION OF THE INVENTION

In one embodiment, a method for reducing hydrogen sulfide in asphalt, comprises adding a hydrogen sulfide scavenger composition to the asphalt, wherein the hydrogen sulfide scavenger composition comprises a polyaliphatic amine having the formula I:

H₂NRNH-(RNH)ₙ-H I

wherein R is an aliphatic radical and n is from about 0 to about 15; and a catalyst,
wherein the catalyst has formula II:

R₁R₂R₃R₄N ⁺ X⁻ II

wherein R₁, R₂, R₃ and R₄ are each independently alkyl groups having from 1 to 30 carbon atoms, hydroxyalkyl groups having from 1 to 30 carbon atoms or an aryl group having from 6 to 30 carbon atoms; and X is a halide or methyl sulfate.

In another embodiment, a method for treating asphalt comprises adding a hydrogen sulfide scavenger composition to the asphalt products, wherein the hydrogen sulfide scavenger composition comprises a polyaliphatic amine having the formula I:

H₂NRNH-(RNH)ₙ-H I

wherein R is an aliphatic radical and n is from about 0 to about 15; and a catalyst,
wherein the catalyst has formula II:

R₁R₂R₃R₄N ⁺ X⁻ II

wherein R₁, R₂, R₃ and R₄ are each independently alkyl groups having from 1 to 30 carbon atoms, hydroxyalkyl groups having from 1 to 30 carbon atoms or an aryl group having from 6 to 30 carbon atoms; and X is a halide or methyl sulfate.

In another embodiment, a hydrogen sulfide scavenger composition comprises a polyaliphatic amine and a catalyst, said polyaliphatic amine having the formula I:

H₂NRNH-(RNH)ₙ-H I

wherein R is an aliphatic radical and n is from about 0 to about 15,
wherein the catalyst has formula II:

R₁R₂R₃R₄N ⁺ X⁻ II

wherein R₁, R₂, R₃ and R₄ are each independently alkyl groups having from 1 to 30 carbon atoms, hydroxyalkyl groups having from 1 to 30 carbon atoms or an aryl group having from 6 to 30 carbon atoms; and X is a halide or methyl sulfate.

The various embodiments provide an organic-based hydrogen sulfide scavenger for asphalt and for an improved method of removing hydrogen sulfide from asphalt products.

### BRIEF DESCRIPTION OF THE DRAWINGS

Figure 1 is a bar graph showing the amount of hydrogen sulfide in ppm in asphalt samples versus time in minutes.
Figure 2 is a bar graph showing the amount of hydrogen sulfide in ppm in asphalt samples versus time in minutes.

### DETAILED DESCRIPTION OF THE INVENTION

In one embodiment, a method for reducing hydrogen sulfide in asphalt, comprises adding a hydrogen sulfide scavenger composition to the asphalt, wherein the hydrogen sulfide scavenger composition comprises a polyaliphatic amine having formula I:

H₂NRNH-(RNH)ₙ-H I

wherein R is an aliphatic radical and n is from about 0 to about 15; and a catalyst,
wherein the catalyst has formula II:

R₁R₂R₃R₄N ⁺ X⁻ II

wherein R₁, R₂, R₃ and R₄ are each independently alkyl groups having from 1 to 30 carbon atoms, hydroxyalkyl groups having from 1 to 30 carbon atoms or an aryl group having from 6 to 30 carbon atoms; and X is a halide or methyl sulfate.

Asphalt products often contain hydrogen sulfide, which is corrosive and poisonous and must be removed before the asphalt products can be upgraded to higher value products, such as gasoline and diesel. Asphalt is any type of crude oil residuum or heavy oil that is produced from the distillation of crude oil. It is a heavy intermediate or finished product having a boiling point in a temperature range from about 500°F to about 1100°F. The asphalt can have a range of hydrogen sulfide content and any level of hydrogen sulfide can be treated.

The hydrogen sulfide scavenger controls and removes hydrogen sulfide from asphalt. It is an organic-based composition comprising a polyaliphatic amine. The polyaliphatic amine has the formula I:

H₂NRNH-(RNH)ₙ-H I

wherein R is an aliphatic radical and n is from about 0 to about 15.

In one embodiment, n is from about 0 to about 10. In another embodiment, n is from about 1 to about 5.

In one embodiment, the aliphatic radical may be alkyl, alkenyl or alkoxy. The aliphatic radical may be a straight or branched chain and may be substituted or unsubstituted. In one embodiment, the aliphatic group is substituted with one or more organic or inorganic radicals, such as halogen, alkyloxy, alkoxy, amino, hydroxyl, cyano and mercapto groups. In one embodiment, the halogen group may be chloro, bromo or iodo.

In another embodiment, the aliphatic group is a C₁-C₃₀ alkyl group, a C₂-C₃₀ alkenyl group or a C₁-C₃₀ alkoxy group. In one embodiment, the alkyl group may be methyl, ethyl, n-butyl, t-butyl, isopropyl, pentyl or hexyl. In another embodiment, the alkoxy group is methoxy, ethoxy or isopropoxy. In another embodiment, the alkenyl group may be ethylene, methylethylene, trimethylene, phenylethylene or propylene.

In one embodiment, the polyaliphatic amine is a polyalkyleneamine. In another embodiment, the polyalkyleneamine may be ethylenediamine, diethylenetriamine, triethylenetetraamine, tetraethylenepentamine, propylethylenediamine, tetrabutylenepentamine, hexaethyleneheptamine, hexapentyleneheptamine, heptaethyleneoctamine, octaethylenenonamine, nonaethylenedecamine, decaethyleneundecamine, decahexyleneundecamine, undecaethylenedodecamine, dodecaethylenetridecamine, tridecaethylenedodecamine, dodecaethylenetriamine, tridecaethylenetetradecamine or N-tallow propylenediamine.

The scavenger composition is added to the asphalt in any conventional manner. In one embodiment, the scavenger composition is injected into the asphalt, such as via a metering pump system. The scavenger composition can be added to the asphalt in a continuous manner or can be added in one or more batch modes and repeated additions may be made.

The scavenger composition is added to the asphalt in any amount sufficient to reduce the levels of hydrogen sulfide in the asphalt. In one embodiment, the scavenger composition is added in an amount of from about 50 ppm to about 3000 ppm by weight, based on the weight of the asphalt. In another embodiment, the scavenger composition is added in an amount of from about 50 ppm by weight to about 1000 ppm by weight, based on the weight of the asphalt.

The scavenger composition significantly reduces the hydrogen sulfide levels contained in the asphalt. The actual amount of residual hydrogen sulfide will vary depending on the starting amount. In one embodiment, the hydrogen sulfide levels are reduced to 10 ppm by weight or less, based on the weight of the asphalt. In another embodiment, the hydrogen sulfide levels are reduced to 2 ppm by weight or less, based on the weight of the asphalt. In another embodiment, the hydrogen sulfide levels are reduced to less than 1 ppm by weight, based on the weight of the asphalt.

The hydrogen sulfide scavenger composition may optionally include a solvent. The solvent aids the scavenger composition in dispersing with the asphalt products. The solvent may be any solvent that is miscible with polyaliphatic amines and that has a high flashpoint. In one embodiment, the solvent has a flashpoint of at least 200°F. In one embodiment, the solvent includes, but is not limited to, propylene glycol, 1,4-butanediol, ethylene carbonate or propylene carbonate.

In one embodiment, the solvent may be added in an amount of from about 0 to about 300 percent by weight based on the weight of the polyaliphatic amine. In another embodiment, the solvent is added in an amount of from about 0 to about 150 percent by weight based on the weight of the polyaliphatic amine. In another embodiment, the solvent is added in an amount of from about 0 to about 80 percent by weight, based on the weight of the polyaliphatic amine.

In another embodiment, the hydrogen sulfide scavenger is a composition comprising a polyaliphatic amine and a catalyst. The catalyst improves the efficacy of the scavenger composition and enhances removal of hydrogen sulfide. The catalyst has formula II:

R₁R₂R₃R₄N⁺ X⁻ II

wherein R₁, R₂, R₃ and R₄ are each independently alkyl groups having from 1 to 30 carbon atoms, hydroxyalkyl groups having from 1 to 30 carbon atoms or an aryl group having from 6 to 30 carbon atoms; and X is a halide or methyl sulfate. In one embodiment, the halide may be chloride, bromide or iodide. In another embodiment, the catalyst is alkyl benzyl ammonium chloride or benzyl cocoalkyl dimethyl quaternary ammonium chloride. In another embodiment, the catalyst includes dicocodimethylammonium chloride, ditallowdimethylammonium chloride, di(hydrogenated tallow alkyl) dimethyl quaternary ammonium methyl chloride, methyl bis (2-hydroxyethyl cocoalkyl quaternary ammonium choride, dimethyl(2-ethyl) tallow ammonium methyl sulfate or hydrogenated tallow alkyl (2-ethylhyexyl) dimethyl quaternary ammonium methylsulfate.

In one embodiment, a scavenger composition comprises from about 20 to about 98 percent by weight polyaliphatic amine, from about 2 to about 20 percent by weight catalyst and from 0 to about 78 percent by weight of a solvent, based on the weight of the composition. In another embodiment, the scavenger composition comprises from about 50 to about 97 percent by weight polyaliphatic amine, from about 3 to about 10 percent by weight catalyst and from 0 to about 47 percent by weight of a solvent, based on the weight of the composition.

The scavenger composition may optionally contain other compounds, such as amine dispersants, corrosion inhibitors, surfactants and the like. In one embodiment, the surfactants include anionic surfactants, nonionic surfactants or combinations thereof.

The scavenger composition may be added to the asphalt as one formulation or the polyaliphatic amine and other components may be added separately to the asphalt. Optional components, such as the solvent or other additives may be added separately, may be combined into one formulation with the polyaliphatic amine or may be preblended with other components before adding to the asphalt. In one embodiment, the components in the scavenger composition are blended together before adding to the asphalt.

In another embodiment, a method for treating asphalt comprises adding a hydrogen sulfide scavenger composition to the asphalt products, wherein the hydrogen sulfide scavenger composition comprises a polyaliphatic amine having formula I:

H₂NRNH-(RNH)ₙ-H I

wherein R is an aliphatic radical and n is from about 0 to about 15; and a catalyst,
wherein the catalyst has formula II:

R₁R₂R₃R₄N ⁺ X⁻ II

wherein R₁, R₂, R₃ and R₄ are each independently alkyl groups having from 1 to 30 carbon atoms, hydroxyalkyl groups having from 1 to 30 carbon atoms or an aryl group having from 6 to 30 carbon atoms; and X is a halide or methyl sulfate.

In one embodiment, n is from about 0 to about 10. In another embodiment, n is from about 1 to about 5.

In one embodiment, the aliphatic radical may be alkyl, alkenyl or alkoxy. The aliphatic radical may be a straight or branched chain and may be substituted or unsubstituted. In one embodiment, the aliphatic group is substituted with one or more organic or inorganic radicals, such as halogen, alkyloxy, alkoxy, amino, hydroxyl, cyano and mercapto groups. In one embodiment, the halogen group may be chloro, bromo or iodo.

In another embodiment, the aliphatic group is a C₁-C₃₀ alkyl group, a C₂-C₃₀ alkenyl group or a C₁-C₃₀ alkoxy group. In one embodiment, the alkyl group may be methyl, ethyl, n-butyl, t-butyl, isopropyl, pentyl or hexyl. In another embodiment, the alkoxy group is methoxy, ethoxy or isopropoxy. In another embodiment, the alkenyl group may be ethylene, methylethylene, trimethylene, phenylethylene or propylene.

In one embodiment, the polyaliphatic amine is a polyalkyleneamine. In another embodiment, the polyalkyleneamine may be ethylenediamine, diethylenetriamine, triethylenetetraamine, tetraethylenepentamine, propylethylenediamine, tetrabutylenepentamine, hexaethyleneheptamine, hexapentyleneheptamine, heptaethyleneoctamine, octaethylenenonamine, nonaethylenedecamine, decaethyleneundecamine, decahexyleneundecamine, undecaethylenedodecamine, dodecaethylenetridecamine, tridecaethylenedodecamine, dodecaethylenetriamine, tridecaethylenetetradecamine or N-tallow propylenediamine.

The hydrogen sulfide scavenger composition may optionally include a solvent or other additive as explained above.

In another embodiment, a hydrogen sulfide scavenger composition comprises a polyaliphatic amine and a catalyst, said polyaliphatic amine having the formula I:

H₂NRNH-(RNH)ₙ-H I

wherein R is an aliphatic radical and n is from about 0 to about 15,
wherein the catalyst has formula II:

R₁R₂R₃R₄N ⁺ X⁻ II

wherein R₁, R₂, R₃ and R₄ are each independently alkyl groups having from 1 to 30 carbon atoms, hydroxyalkyl groups having from 1 to 30 carbon atoms or an aryl group having from 6 to 30 carbon atoms; and X is a halide or methyl sulfate.

In one embodiment, n is from about 0 to about 10. In another embodiment, n is from about 1 to about 5.

In one embodiment, the aliphatic radical may be alkyl, alkenyl or alkoxy. The aliphatic radical may be a straight or branched chain and may be substituted or unsubstituted. In one embodiment, the aliphatic group is substituted with one or more organic or inorganic radicals, such as halogen, alkyloxy, alkoxy, amino, hydroxyl, cyano and mercapto groups. In one embodiment, the halogen group may be chloro, bromo or iodo.

In another embodiment, the aliphatic group is a C₁-C₃₀ alkyl group, a C₂-C₃₀ alkenyl group or a C₁-C₃₀ alkoxy group. In one embodiment, the alkyl group may be methyl, ethyl, n-butyl, t-butyl, isopropyl, pentyl or hexyl. In another embodiment, the alkoxy group is methoxy, ethoxy or isopropoxy. In another embodiment, the alkenyl group may be ethylene, methylethylene, trimethylene, phenylethylene or propylene.

In one embodiment, the polyaliphatic amine is a polyalkyleneamine. In another embodiment, the polyalkyleneamine may be ethylenediamine, diethylenetriamine, triethylenetetraamine, tetraethylenepentamine, propylethylenediamine, tetrabutylenepentamine, hexaethyleneheptamine, hexapentyleneheptamine, heptaethyleneoctamine, octaethylenenonamine, nonaethylenedecamine, decaethyleneundecamine, decahexyleneundecamine, undecaethylenedodecamine, dodecaethylenetridecamine, tridecaethylenedodecamine, dodecaethylenetriamine, tridecaethylenetetradecamine or N-tallow propylenediamine.

### EXAMPLES

### EXAMPLE 1

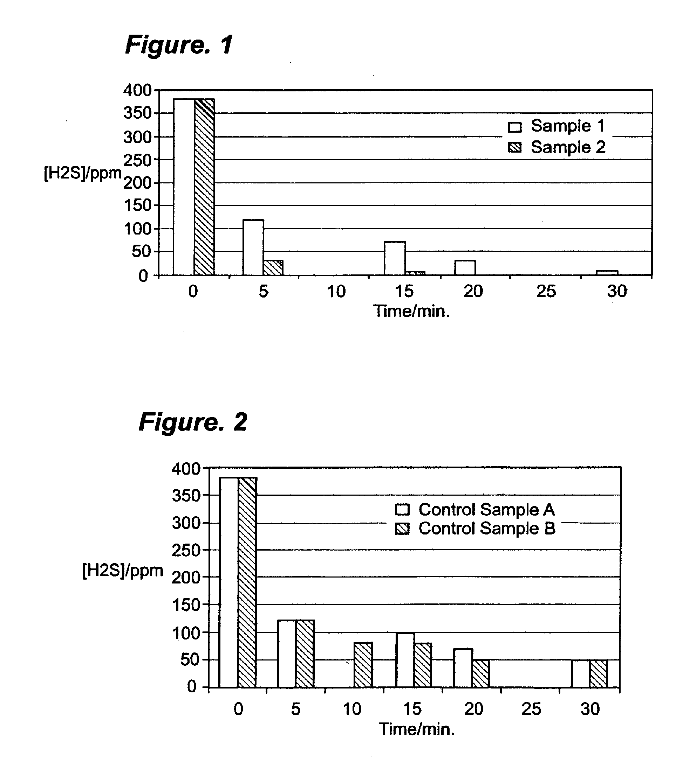

Sample 1 was prepared by dispersing 51 mg of diethylenetriamine in 34 mg propylene glycol. Sample 2 was prepared by dispersing 51 mg of diethylenetriamine and 3 mg of alkyl benzyl ammonium chloride (ARQUAD DMCB-80 from Akzo-Nobel) in 34 mg propylene glycol. Sample 1 was added to 578 g of an asphalt (from Conoco Phillips, West Lake, LA refinery) containing over 350 ppm hydrogen sulfide. Sample 2 was added to 821 g of the asphalt. The concentration of the hydrogen sulfide in the vapor phase was determined at frequent intervals as shown in Figure 1. The data scatter can be attributed to a +/- 15% error in determining H₂S vapor concentrations.

Figure 1 shows that samples 1 and 2 reduce and control the hydrogen sulfide content in the asphalt. The addition of the catalyst (alkyl benzyl ammonium chloride) significantly increases the efficacy of the scavenger composition. Sample 2 effectively controls the hydrogen sulfide level in 42% more asphalt.

### EXAMPLE 2

A control sample A was prepared by dispersing 51 mg of 1,3,5-trimethylhexahydro-1,3,5-triazine in 34 mg propylene glycol. A control sample B was prepared by dispersing 51 mg of MA-triazine and 3 mg of alkyl benzyl ammonium chloride (ARQUAD DMCB-80 from Akzo-Nobel) in 34 mg propylene glycol. Control sample A was added to 578 g of an asphalt (from Conoco Phillips, West Lake, LA refinery) containing over 350 ppm hydrogen sulfide. Control sample B was added to 821 g of the asphalt. The concentration of the hydrogen sulfide in the vapor phase was determined at frequent intervals as shown in Figure 2. The data scatter can be attributed to a +/- 15% error in determining H₂S vapor concentrations.

Figure 2 shows that the catalyst (ARQUAD DMCB-80) has no impact on the efficacy of hydrogen sulfide scavenging when using an organic-based MA-Triazine. The data in Figure 2 also shows that the overall scavenging of the control samples is not as effective as the scavenging for samples 1 and 2 in Figure 1.

## Claims

1. A method for reducing hydrogen sulfide in asphalt, comprising adding a hydrogen sulfide scavenger composition to the asphalt, wherein the hydrogen sulfide scavenger comprises a polyaliphatic amine having formula I:
H₂NRNH-(RNH)ₙ-H I
wherein R is an aliphatic radical and n is from about 0 to about 15; and
a catalyst, wherein the catalyst has formula II:
R₁R₂R₃R₄N ⁺ X⁻ II
wherein R₁, R₂, R₃ and R₄ are each independently alkyl groups having from 1 to 30 carbon atoms, hydroxyalkyl groups having from 1 to 30 carbon atoms or an aryl group having from 6 to 30 carbon atoms; and X is a halide or methyl sulfate.

2. A method for treating asphalt comprising adding a hydrogen sulfide scavenger composition to the asphalt products, wherein the hydrogen sulfide scavenger composition comprises a polyaliphatic amine having the formula I:
H₂NRNH-(RNH)ₙ-H I
wherein R is an aliphatic radical and n is from about 0 to about 15; and
a catalyst, wherein the catalyst has formula II:
R₁R₂R₃R₄N ⁺ X⁻ II
wherein R₁, R₂, R₃ and R₄ are each independently alkyl groups having from 1 to 30 carbon atoms, hydroxyalkyl groups having from 1 to 30 carbon atoms or an aryl group having from 6 to 30 carbon atoms; and X is a halide or methyl sulfate.

3. The method of claim 1 or claim 2, wherein the aliphatic radical is a C₁-C₃₀ alkyl, C₂-C₃₀ alkenyl or C₁-C₃₀ alkoxy.

4. The method of claim 1 or claim 2, wherein the polyaliphatic amine is a polyalkyleneamine.

5. The method of claim 4, wherein the polyalkyleneamine is selected from the group consisting of ethylenediamine, diethylenetriamine, triethylenetetraamine, tetraethylenepentamine, propylethylenediamine, tetrabutylenepentamine, hexaethyleneheptamine, hexapentyleneheptamine, heptaethyleneoctamine, octaethylenenonamine, nonaethylenedecamine, decaethyleneundecamine, decahexyleneundecamine, undecaethylenedodecamine, dodecaethylenetridecamine, tridecaethylenedodecamine, dodecaethylenetriamine, tridecaethylenetetradecamine and N-tallow propylenediamine.

6. The method of claim 1 or claim 2, wherein the scavenger composition is added in an amount of from 50 ppm to 3000 ppm by weight, based on the weight of the asphalt.

7. The method of claim 1 or claim 2, wherein the hydrogen sulfide scavenger composition further comprises a solvent.

8. The method of claim 1 or claim 2, wherein the catalyst is selected from the group consisting of dicocodimethylammonium chloride, ditallowdimethylammonium chloride, di(hydrogenated tallow alkyl) dimethyl quaternary ammonium methyl chloride, methyl bis (2-hydroxyethyl cocoalkyl quaternary ammonium choride, dimethyl(2-ethyl) tallow ammonium methyl sulfate and hydrogenated tallow alkyl (2-ethylhyexyl) dimethyl quaternary ammonium methylsulfate.

9. The method of claim 1 or claim 2, wherein the scavenger composition comprises from 20 to 98 percent by weight polyaliphatic amine, from 2 to 20 percent by weight catalyst and from 0 to 78 percent by weight of a solvent, based on the weight of the composition.

10. The method of claim 1 or claim 2 wherein the polyaliphatic amine is diethylene triamine and the catalyst is alkyl benzyl ammonium chloride.

11. A hydrogen sulfide scavenger composition comprising a polyaliphatic amine and a catalyst, said polyaliphatic amine having the formula I:
H₂NRNH-(RNH)ₙ-H I
wherein R is an aliphatic radical and n is from about 0 to about 15; and
wherein the catalyst has formula II:
R₁R₂R₃R₄N ⁺ X⁻ II
wherein R₁, R₂, R₃ and R₄ are each independently alkyl groups having from 1 to 30 carbon atoms, hydroxyalkyl groups having from 1 to 30 carbon atoms or an aryl group having from 6 to 30 carbon atoms; and X is a halide or methyl sulfate.

12. The scavenger composition of claim 11, wherein the aliphatic radical is a C₁-C₃₀ alkyl, C₂-C₃₀ alkenyl or C₁-C₃₀ alkoxy.

13. The scavenger composition of claim 11, wherein the polyaliphatic amine is a polyalkyleneamine.

## Patentansprüche

1. Verfahren zum Reduzieren von Schwefelwasserstoff in Asphalt, das die Zugabe einer Schwefelwasserstoffabsorberzusammensetzung zu dem Asphalt umfasst, wobei der Schwefelwasserstoffabsorber ein polyaliphatisches Amin beinhaltet, das Formel I aufweist:
H₂NRNH-(RNH)ₙ-H I
wobei R ein aliphatisches Radikal ist und n von etwa 0 bis etwa 15 ist; und
einen Katalysator, wobei der Katalysator Formel II aufweist:
R₁R₂R₃R₄N⁺X⁻ II
wobei R₁, R₂, R₃ und R₄ jeweils unabhängig Alkylgruppen mit 1 bis 30 Kohlenstoffatomen, Hydroxyalkylgruppen mit 1 bis 30 Kohlenstoffatomen oder eine Arylgruppe mit 6 bis 30 Kohlenstoffatomen sind und X ein Halid oder Methylsulfat ist.

2. Verfahren zum Behandeln von Asphalt, das die Zugabe einer Schwefelwasserstoffabsorberzusammensetzung zu den Asphaltprodukten umfasst, wobei die Schwefelwasserstoffabsorberzusammensetzung ein polyaliphatisches Amin beinhaltet, das Formel I aufweist:
H₂NRNH-(RNH)ₙ-H I
wobei R ein aliphatisches Radikal ist und n von etwa 0 bis etwa 15 ist; und
einen Katalysator, wobei der Katalysator Formel II aufweist:
R₁R₂R₃R₄N⁺X⁻ II
wobei R₁, R₂, R₃ und R₄ jeweils unabhängig Alkylgruppen mit 1 bis 30 Kohlenstoffatomen, Hydroxyalkylgruppen mit 1 bis 30 Kohlenstoffatomen oder eine Arylgruppe mit 6 bis 30 Kohlenstoffatomen sind und X ein Halid oder Methylsulfat ist.

3. Verfahren gemäß Anspruch 1 oder Anspruch 2, wobei das aliphatische Radikal ein C₁-C₃₀-Alkyl, C₂-C₃₀-Alkenyl oder C₁-C₃₀-Alkoxy ist.

4. Verfahren gemäß Anspruch 1 oder Anspruch 2, wobei das polyaliphatische Amin ein Polyalkylenamin ist.

5. Verfahren gemäß Anspruch 4, wobei das Polyalkylenamin aus der Gruppe ausgewählt ist, die aus Ethylendiamin, Diethylentriamin, Triethylentetraamin, Tetraethylenpentamin, Propylethylendiamin, Tetrabutylenpentamin, Hexaethylenheptamin, Hexapentylenheptamin, Heptaethylenoctamin, Octaethylennonamin, Nonaethylendecamin, Decaethylenundecamin, Decahexylenundecamin, Undecaethylendodecamin, Dodecaethylentridecamin, Tridecaethylendodecamin, Dodecaethylentriamin, Tridecaethylentetradecamin und N-Talgpropylendiamin besteht.

6. Verfahren gemäß Anspruch 1 oder Anspruch 2, wobei die Absorberzusammensetzung in einer Menge von 50 ppm bis 3000 ppm nach Gewicht, bezogen auf das Gewicht des Asphalts, zugegeben wird.

7. Verfahren gemäß Anspruch 1 oder Anspruch 2, wobei die Schwefelwasserstoffabsorberzusammensetzung ferner ein Lösungsmittel beinhaltet.

8. Verfahren gemäß Anspruch 1 oder Anspruch 2, wobei der Katalysator aus der Gruppe ausgewählt ist, die aus Dicocodimethylammoniumchlorid, Di-Talgdimethylammoniumchlorid, Di(hydriertem Talgalkyl)dimethyl quartärem Ammoniummethylchlorid, Methyl-bis(2-hydroxyethylcocoalkyl quartärem Ammoniumchlorid, Dimethyl(2-ethyl)-Talgammoniummethylsulfat und hydriertem Talgalkyl-(2-ethylhyexyl)-dimethyl quartärem Ammoniummethylsulfat besteht.

9. Verfahren gemäß Anspruch 1 oder Anspruch 2, wobei die Absorberzusammensetzung 20 bis 98 Gewichtsprozent polyaliphatisches Amin, 2 bis 20 Gewichtsprozent Katalysator und 0 bis 78 Gewichtsprozent eines Lösungsmittels, bezogen auf das Gewicht der Zusammensetzung, beinhaltet.

10. Verfahren gemäß Anspruch 1 oder Anspruch 2, wobei das polyaliphatische Amin Diethylentriamin ist und der Katalysator Alkylbenzylammoniumchlorid ist.

11. Schwefelwasserstoffabsorberzusammensetzung, die ein polyaliphatisches Amin und einen Katalysator umfasst, wobei das polyaliphatische Amin die Formel I aufweist:
H₂NRNH-(RNH)ₙ-H I
wobei R ein aliphatisches Radikal ist und n von etwa 0 bis etwa 15 ist; und wobei der Katalysator Formel II aufweist:
R₁R₂R₃R₄N⁺X⁻ II
wobei R₁, R₂, R₃ und R₄ jeweils unabhängig Alkylgruppen mit 1 bis 30 Kohlenstoffatomen, Hydroxyalkylgruppen mit 1 bis 30 Kohlenstoffatomen oder eine Arylgruppe mit 6 bis 30 Kohlenstoffatomen sind und X ein Halid oder Methylsulfat ist.

12. Verfahren gemäß Anspruch 11, wobei das aliphatische Radikal ein C₁-C₃₀-Alkyl, C₂-C₃₀-Alkenyl oder C₁-C₃₀-Alkoxy ist.

13. Verfahren gemäß Anspruch 11, wobei das polyaliphatische Amin ein Polyalkylenamin ist.

## Revendications

1. Procédé de réduction du sulfure d'hydrogène dans de l'asphalte, comprenant l'addition d'une composition d'adsorbant de sulfure d'hydrogène à de l'asphalte, dans lequel l'adsorbant de sulfure d'hydrogène comprend une amine polyaliphatique de formule I :
H₂NRNH-(RNH)ₙ-H (I)
dans laquelle R est un radical aliphatique et n est égal à environ 0 à environ 15 ; et
un catalyseur, dans lequel le catalyseur a la formule (II) :
R₁R₂R₃R₄N⁺X⁻ (II)
dans laquelle R₁, R₂, R₃ et R₄ sont chacun indépendamment des groupements alkyle ayant 1 à 30 atomes de carbone, des groupements hydroxyalkyle ayant 1 à 30 atomes de carbone ou un groupement aryle ayant 6 à 30 atomes de carbone ; et X est un halogénure ou un sulfate de méthyle.

2. Procédé de traitement de l'asphalte, comprenant l'addition d'une composition d'adsorbant de sulfure d'hydrogène aux produits asphaltés, dans lequel la composition d'adsorbant de sulfure d'hydrogène comprend une amine polyaliphatique ayant la formule (I) :
H₂NRNH-(RNH)ₙ-H (I)
dans laquelle R est un radical aliphatique et n est égal à environ 0 à environ 15 ; et
un catalyseur, dans lequel le catalyseur a la formule (II) :
R₁R₂R₃R₄N⁺X⁻ (II)
dans laquelle R₁, R₂, R₃ et R₄ sont chacun indépendamment des groupements alkyle ayant 1 à 30 atomes de carbone, des groupements hydroxyalkyle ayant 1 à 30 atomes de carbone ou un groupement aryle ayant 6 à 30 atomes de carbone ; et X est un halogénure ou un sulfate de méthyle.

3. Procédé selon la revendication 1 ou la revendication 2, dans lequel le radical aliphatique est un groupement alkyle en C₁-C₃₀, alcényle en C₂-C₃₀ ou alcoxy en C₁-C₃₀.

4. Procédé selon la revendication 1 ou la revendication 2, dans lequel l'amine polyaliphatique est une polyalkylèneamine.

5. Procédé selon la revendication 4, dans lequel la polyalkylèneamine est choisie dans le groupe des suivantes : éthylènediamine, diéthylènetriamine, triéthylènetétraamine, tétraéthylènepentamine, propyléthylènediamine, tétrabutylènepentamine, hexaéthylèneheptamine, hexapentylèneheptamine, heptaéthylèneoctamine, octaéthylènenonamine, nonaéthylènedécamine, décaéthylèneundécamine, décahexylèneundécamine, undécaéthylènedodécamine, dodécaéthylènetridécamine, tridécaéthylène-dodécamine, dodécaéthylènetriamine, tridéca-éthylènetétradécamine et N-suif propylènediamine.

6. Procédé selon la revendication 1 ou la revendication 2, dans lequel la composition d'adsorbant est ajoutée en quantité de 50 ppm à 3000 ppm en poids sur la base du poids de l'asphalte.

7. Procédé selon la revendication 1 ou la revendication 2, dans lequel la composition d'adsorbant de sulfure d'hydrogène comprend en outre un solvant.

8. Procédé selon la revendication 1 ou la revendication 2, dans lequel le catalyseur est choisi dans le groupe constitué des suivants : chlorure de dicocodiméthylammonium, chlorure de disuifdiméthylammonium, chlorure méthylique de di(suif alkyl hydrogéné) diméthylammonium quaternaire, chlorure méthylique de bis (2-hydroxyéthyl cocoalkyl) ammonium quaternaire, sulfate méthylique de diméthyl(2-éthyl)suif ammonium et sulfate méthylique hydrogéné de suif alkyl(2-éthylhexyl)diméthylammonium quaternaire.

9. Procédé selon la revendication 1 ou la revendication 2, dans lequel la composition d'adsorbant comprend 20 à 98 % en poids d'amine polyaliphatique, 2 à 20 % en poids de catalyseur et 0 à 78 % en poids d'un solvant sur la base du poids de la composition.

10. Procédé selon la revendication 1 ou la revendication 2, dans lequel l'amine polyaliphatique est la diéthylènetriamine et le catalyseur est le chlorure d'alkyl benzyl ammonium.

11. Composition d'adsorbant de sulfure d'hydrogène comprenant une amine polyaliphatique et un catalyseur, ladite amine polyaliphatique ayant la formule (I) :
H₂NRNH-(RNH)ₙ-H (I)
dans laquelle R est un radical aliphatique et n est égal à environ 0 à environ 15 ; et
un catalyseur, dans lequel le catalyseur a la formule (II) :
R₁R₂R₃R₄N⁺X⁻ (II)
dans laquelle R₁, R₂, R₃ et R₄ sont chacun indépendamment des groupements alkyle ayant 1 à 30 atomes de carbone, des groupements hydroxyalkyle ayant 1 à 30 atomes de carbone ou un groupement aryle ayant 6 à 30 atomes de carbone ; et X est un halogénure ou un sulfate de méthyle.

12. Composition d'adsorbant selon la revendication 11, dans laquelle le radical aliphatique est un groupement alkyle en C₁-C₃₀, alcényle en C₂-C₃₀ ou alcoxy en C₁-C₃₀.

13. Composition d'adsorbant selon la revendication 11, dans laquelle l'amine polyaliphatique est une polyalkylèneamine.
